# EUROPEAN PATENT APPLICATION

(11) **EP 3 124 200 A1**
(43) Date of publication of application: **01.02.2017**
(21) Application number: 16175563.2
(22) Date of filing: 21.06.2016
(51) Int. Cl.: B29C 47/08, B29C 47/92, B29C 47/68, B29C 47/70

(54) **SYSTEM AND METHOD FOR AUTOMATED PRESSURE REGULATION BETWEEN THE EXTRUDER OUTPUT AND THE DIE INLET**

(30) Priority: 30.07.2015 US 201514814071
(71) Applicant: NORDSON CORPORATION, Westlake, OH 44145-1119 (US)
(72) Inventor: Pitsch, Dale P., Jim Falls, WI 54748 (US)
(74) Representative: Eisenführ Speiser

(57) **Abstract**

A system and method of regulating a pressure of a fluid with a valve block having a valve block inlet in fluid communication with an outlet of an extruder and a valve block outlet in fluid communication with a die. A transducer in fluid communication with the flow channel and in signal communication with a controller of the motor can sense a pressure and communicate the pressure to a controller of a motor. The motor can adjust a position of a valve to regulate the pressure of the fluid.

## Description

### TECHNICAL FIELD

This disclosure relates to extruders and, more particularly, to systems and methods for automatically regulating the pressure of an extruder output.

### BACKGROUND

Extrusion is a process used to create products having relatively constant cross-sectional profile. In plastics extrusion, plastic pellets or chips are fed into an extruder having at least one screw. The plastic is melted into a molten state by heating elements in the extruder and/or shear heating from the extrusion screw. The turning of the screw or screws forces the molten polymer through the extruder and to a die, which forms the molten plastic into a desired shape.

### SUMMARY

In general, this disclosure relates to systems and methods for automated pressure regulation of an extruder output. Fluid, such as a molten polymer, generally exits an outlet of an extruder and enters a die for shaping into a desired structure, such as a film. The systems and methods described in this disclosure provide a way to control the pressure of a fluid exiting an extruder before entering a die without direct operator intervention.

In one example, this disclosure describes a method of regulating a pressure of a fluid with a valve block having a valve block inlet in fluid communication with an outlet of an extruder and a valve block outlet in fluid communication with a die. In one configuration a flow channel extends between the valve block inlet and the valve block outlet, and a valve assembly with a valve is selectively positionable within the flow channel. A transducer in fluid communication with the flow channel and in signal communication with a controller of the motor can sense a pressure of a fluid travelling through the flow channel. The transducer can also send a signal representative of the pressure to the controller of the motor. If the signal indicates the pressure is below a target pressure, the exemplary method can include the step of actuating the motor to drive the valve in a first direction with respect to the flow channel. Alternatively, if the signal indicates the pressure is above a target pressure, the exemplary method can include the step of actuating the motor to drive the valve in a second direction opposite to the first direction with respect to the flow channel. And, if the signal indicates the pressure is within a target range, the motor is not actuated in accordance with the exemplary method.

In another example, the disclosure describes a system useful for regulating the pressure of a fluid entering a die. In one configuration, the system includes a valve block having a valve block inlet in fluid communication with an outlet of an extruder, a valve block outlet in fluid communication with an inlet of a die, and a flow channel extending between the valve block inlet and the valve block outlet. The system can also include a valve assembly having a valve selectively positionable within the flow channel by a motor, and a transducer in fluid communication with the flow channel and in signal communication with a controller of the motor. The transducer can sense a pressure of a fluid travelling through the flow channel and communicate a signal representative of the pressure to the controller of the motor. If the signal indicates the pressure is below a target pressure the controller can actuate the motor to drive the valve in a first direction with respect to the flow channel, and if the signal indicates the pressure is above a target pressure the controller can actuate the motor to drive the valve in a second direction opposite to the first direction with respect to the flow channel.

As described herein, such an exemplary method and system are useful for regulating the pressure of a fluid entering a die without direct operator intervention, and can provide the fluid at a relatively constant pressure to make uniform product with the die.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a first side view of a system, including an example valve block, in accordance with an embodiment of the invention, with some features depicted in hidden-line view.
FIG. 2 is a schematic view of a system in accordance with an embodiment of the invention.
FIG. 3 is a second side view of the system of FIG. 1.
FIG. 4 is an end view of the system of FIG. 1.
FIG. 5A is a side cut-away view of a system depicting a valve in a first position in accordance with an embodiment of the invention.
FIG. 5B is a side cut-away view of the system of FIG. 5A depicting the valve in a second position in accordance with an embodiment of the invention.
FIG. 5C shows a close up of the valve in the position of FIG. 5B.
FIG. 6A is an exploded perspective view of a system in accordance with an embodiment of the invention.
FIG. 6B is an exploded perspective view of a valve assembly in accordance with an embodiment of the invention.
FIG. 7 is a flowchart illustrating an exemplary method in accordance with an embodiment of the invention.

### DETAILED DESCRIPTION

The following detailed description is exemplary in nature and is not intended to limit the scope, applicability, or configuration of the invention in any way. The description provides practical illustrations for implementing certain preferred embodiments of the invention. Examples of constructions, materials, dimensions, and manufacturing processes are provided for selected elements; all other elements employ that which is known to those of ordinary skill in the field of the invention. Those of ordinary skill in the art will recognize that many of the given examples have a variety of suitable alternatives.

This disclosure relates to a system and method of automatically regulating the pressure of a fluid, such as a molten polymer, exiting an extruder before it enters a die. In one embodiment, the extruder has an output in fluid commination with a valve block. A transducer senses a pressure of a fluid exiting the extruder and within valve block, and sends a signal representative of pressure to a controller of a motor. The controller compares the signal representative of pressure to a target pressure. If the sensed pressure is below the target pressure, the controller actuates a motor to drive a valve in a first direction to increase the pressure of the fluid in the valve block. Conversely, if the sensed pressure is above the target pressure, the controller actuates the motor to drive the valve in a second direction to reduce the pressure of the fluid in the valve block. In some embodiments, the target pressure is a single set pressure (e.g., a set pressure plus or minus a margin of error). In other embodiments, the target pressure includes a range of pressures. Such a system and method are useful for providing a flow of fluid within a desired pressure range, such as about 4,500 pounds per square inch (psi) to about 4,800 psi, to a die without direct operator intervention.

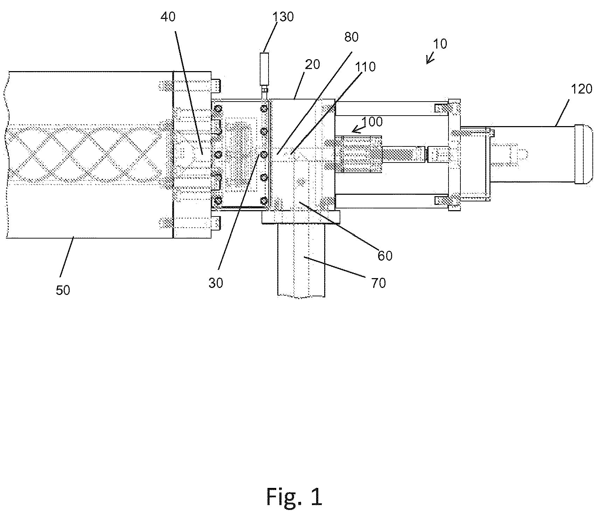

FIG. 1 is a side-view illustration of a system 10 that includes a valve block 20 having a valve block inlet 30 in fluid communication with an outlet 40 of an extruder 50. The valve block receives fluid, such as molten thermoplastic material, from the extruder 50. The valve block has a valve block outlet 60 in fluid communication with an inlet 70 of a die (not shown in FIG. 1). A flow channel 80 extends between the valve block inlet 30 and the valve block outlet 60. Accordingly, fluid discharged from the extruder 50 passes through the flow channel 80 of the valve block 20 before flowing to an inlet 70 of a die for shaping into a structure, such as a film.

FIG. 1 also depicts a valve assembly 100 having a valve 110 selectively positionable within the flow channel 80 by a motor 120. The motor 120 can position the valve 110 within the flow channel 80 to increase or decrease the pressure of a fluid travelling through the flow channel to achieve a desired pressure. Accordingly, the valve 110 can regulate the pressure of a fluid, such as a molten polymer, delivered from an extruder to a die based on the position of the valve within the flow channel.

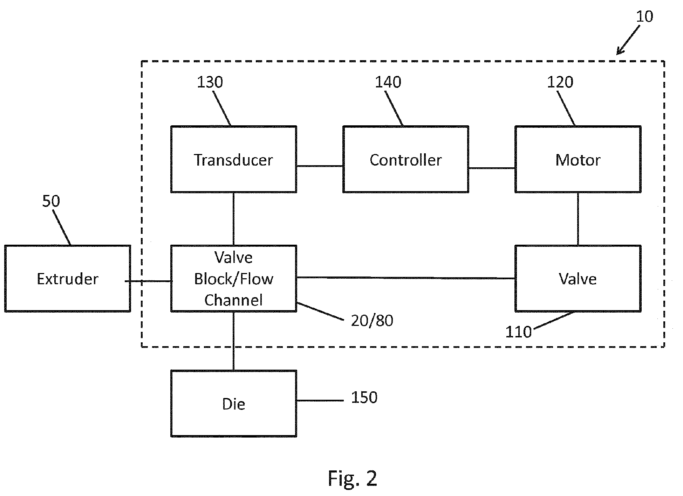

The system 10 can also include a transducer 130 in fluid communication with the flow channel 80. The transducer 130 is useful for sensing the pressure of the fluid travelling through the flow channel. The transducer 130 can be of any type suitable to sense the pressure of the fluid in the flow channel. As shown in the schematic of FIG. 2, the transducer 130 can also be in signal (e.g., non-transitory wireless or via wire, such as an electrical connection) communication with a controller 140 of the motor 120 that positions the valve 110. In such embodiments, the transducer 130 senses a pressure of a fluid travelling through the flow channel 80 and communicates a signal representative of the pressure to the controller 140. The controller 140 can compare the sensed pressure to a target pressure previously provided to the controller. If the signal indicates the sensed pressure is below the target pressure, the controller can actuate the motor 120 to drive the valve 110 in a first direction with respect to the channel 80 to increase the pressure of the fluid. In some embodiments, the first direction is an open direction that reduces the valve's obstruction of the flow channel to reduce a pressure drop across the valve. If the signal indicates the pressure is above a target pressure, the controller 140 actuates the motor 120 to drive the valve 110 in a second direction with respect to the channel 80 to reduce the pressure of the fluid. In some embodiments, the second direction is a close direction that increases the valve's obstruction of the flow channel to increase a pressure drop across the valve. The first and second directions can be opposite to each other. If the signal indicates the pressure is at a target pressure, the controller 140 does not actuate the motor 120 to change the position of the valve with respect to the channel 80. Accordingly, such a system can be useful for automatically regulating the pressure of a fluid, such as a molten polymer, from an outlet of an extruder 50 prior to entry into an inlet of a die 150.

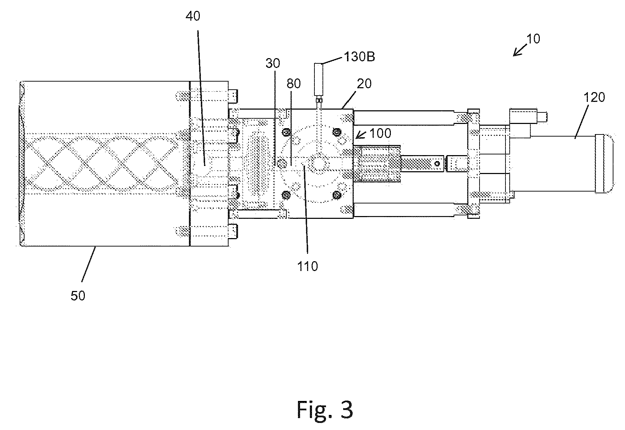

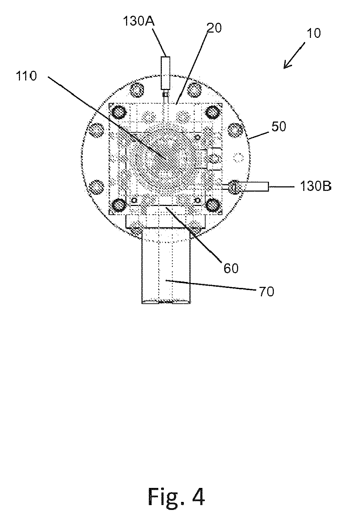

The transducer 130 can be placed at any desirable position. In the embodiment shown in FIG. 1, the transducer 130 is positioned upstream of the valve 110 in a direction of fluid travel through the flow channel 80. In other embodiments, the transducer is positioned downstream of the valve in a direction of fluid travel through the flow channel. Further, transducers can be provided both upstream and downstream of the valve. FIG. 3 depicts a system 10 having a transducer 130B positioned downstream of the valve 110, and FIG. 4 depicts a system with a transducer 130A positioned upstream of the valve 110 and a transducer 130B positioned downstream of the valve 110. An aperture may be formed in the valve block to provide the transducer access to the flow channel.

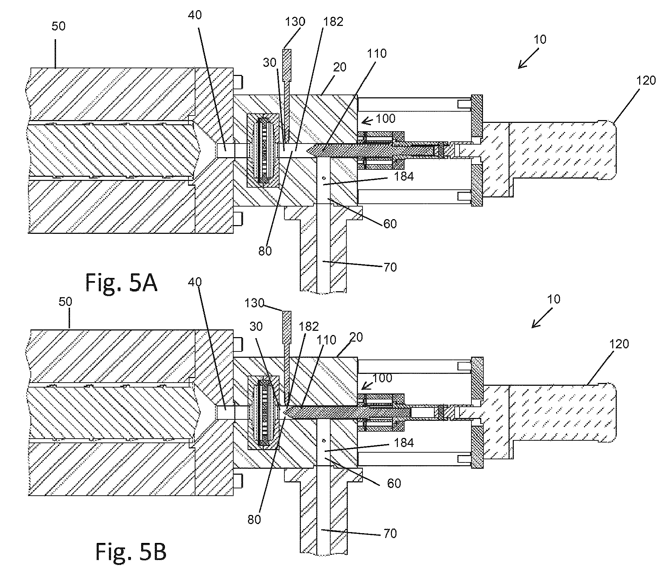

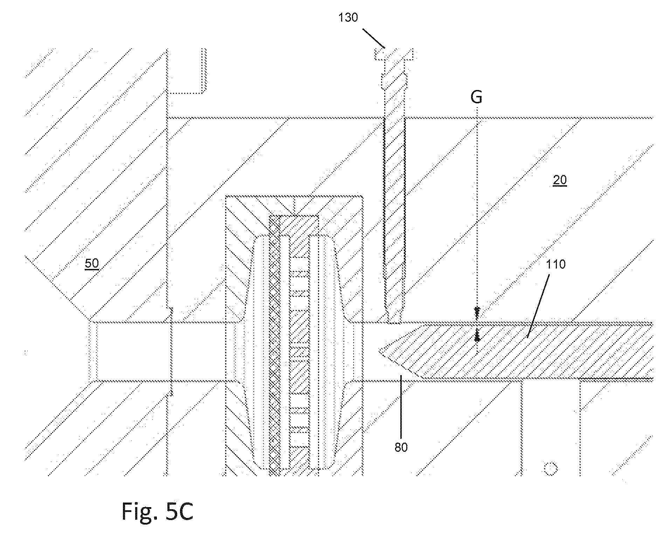

In some embodiments, the valve translates with respect to the flow channel. FIGS. 5A and 5B illustrate the valve 110 in a first position and a second position with respect to the flow channel 80, respectively. More specifically, FIG. 5A depicts the valve 110 at a position less within the flow channel 80 than the position depicted in FIG. 5B. FIG. 5C shows a close up of the valve in the position of FIG. 5B showing a gap G around the valve 110. The size of the gap can depend on the material and desired pressure, but can be in the range of about 0.05 inches to about 0.1 inch (e.g., about 0.07 inches). Since the pressure drop across the valve 110 can vary as a function of its position with respect to the flow channel 80, the pressure of a fluid travelling through the flow channel can be regulated by positioning the valve. In some embodiments, the valve is positionable at an infinite number of positions within a range of valve travel. In other embodiments, the valve is positionable at a discrete number of positions within the range of valve travel. In the embodiment shown, the range of travel is between about 2 inches and about 3 inches (e.g., about 2.5 inches).

The valve block 20 can include any structure suitable to define the flow channel 80 and allow for valve 110 travel. In some embodiments, the flow channel is generally linear from the valve block inlet 30 to the valve block outlet 60. In the embodiment shown in FIGS. 5A and 5B, the flow channel 80 is nonlinear from the valve block inlet 30 to the valve block outlet 60. More specifically, in the embodiment shown, the flow channel 80 has a first portion 182 parallel to a direction of travel of the valve 110, and a second portion 184 perpendicular to the direction of travel of the valve 110. Accordingly, the flow path 80 includes an approximately 90 degree bend, and the valve 110 interfaces with the flow path at the bend (in a line parallel to the first portion 182 and perpendicular to the second portion 184).

Embodiments of the system can also include other components within the valve block and/or flow path. For example, with continued reference to the embodiment shown in FIGS. 5A and 5B, a screen pack 200 can be positioned upstream of the valve 110 in a direction of fluid travel through the flow channel 80. As another example, a breaker plate 210 can be positioned upstream of the valve 110 in a direction of fluid travel through the flow channel 80. The screen pack 200 and the breaker plate 210 can be useful for one or more of the following: increasing back pressure, converting rotational flow of a fluid into parallel flow, and removing impurities.

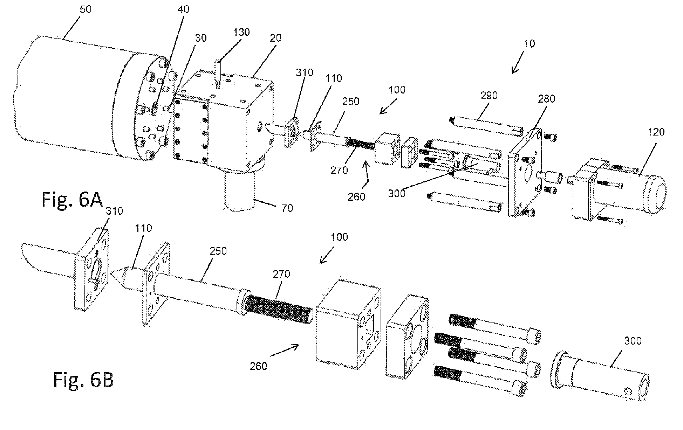

The valve assembly 100 can include any valve 110 useful for regulating the pressure of the fluid in the flow channel 80. Any type of valve can be utilized, including stem valves, ball valves, butterfly valves, gate valves, and needle valves. In the embodiment shown in the exploded views of FIGS. 6A and 6B, the valve 110 includes a valve stem 250. The valve assembly 100 can also include a valve adjustment mechanism 260 to adjust the position of the valve 110. In the embodiment shown, the adjustment mechanism 260 includes a worm gear 270 connected to the valve 110. The adjustment mechanism 260 translates the valve 110 with respect to the flow channel 80 in response to the motor's 120 rotation of the worm gear 270. In FIG. 6A the motor 120 (e.g., a one-half horsepower A/C motor) is attached to a motor mounting bracket 280 offset from the valve block 20 by at least one stand-off bar 290. The output of the motor 120 can connect to a driven member 300 to drive an adjustment mechanism 260 connected to the valve 110 in a desired direction. In the embodiment shown, the valve translates within a valve guide 310 that extends into the valve block 20.

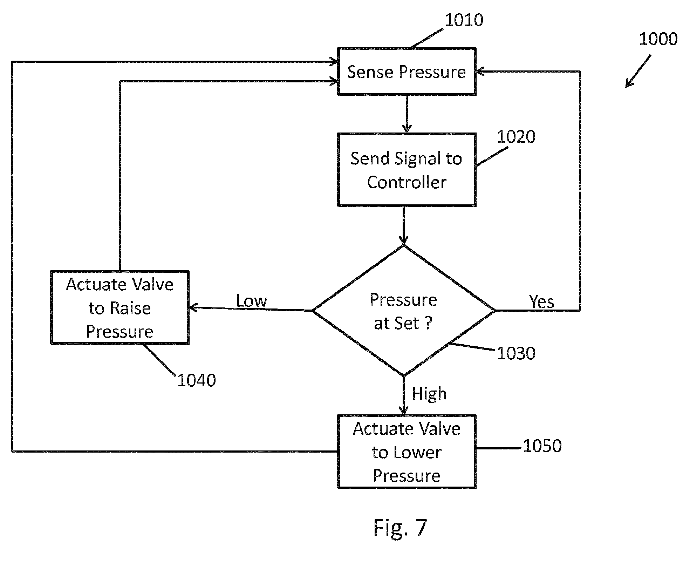

Embodiments of the invention also include methods of regulating a pressure of a fluid with a valve block, such as with any embodiment of the valve blocks discussed herein. Representative steps of an embodiment of such a method 1000 are depicted in FIG. 7. In the embodiment shown, the method 1000 includes sensing a pressure 1010 of a fluid travelling through a flow channel with a transducer and sending a signal 1020 representative of the pressure from the transducer to a controller of a motor. The controller can compare the signal to a target pressure 1030, such as a set pressure with a plus or minus margin of error. If the signal indicates the pressure is below a target pressure (such target having previously been set), the method includes actuating the motor to drive the valve in a first direction 1040 with respect to the flow channel to increase the pressure of the fluid traveling therethrough. If the signal indicates the pressure is above the target pressure, the method can include actuating the motor to drive the valve in a second direction 1050, opposite to the first direction, to decrease the pressure of a fluid travelling therethrough. If the signal indicates the pressure is at a target pressure, the controller does not actuate the motor and the valve is left in its present position. Regardless of the output of the controller, the pressure is sensed to start the cycle over again. The frequency of the pressure of the fluid can be sensed and/or the signal representative of pressure communicated to the controller at any desired frequency. In some embodiments, the pressure can be sensed and communicated at least about once per second (e.g., at least about once per 5 milliseconds). Accordingly, methods in accordance with the invention are useful for providing a fluid to an extrusion die at a relatively constant desired pressure without direct operator intervention.

Various examples have been described. These and other examples are within the scope of the following claims.

## Claims

1. A method of regulating a pressure of a fluid within a flow channel in fluid communication with an outlet of an extruder and an inlet of a die using a valve selectively positionable within said flow channel and a transducer in fluid communication with said flow channel and in signal communication with a controller of a motor, the method comprising:
sensing a pressure of a fluid travelling through said flow channel using said transducer;
sending a signal representative of the pressure from said transducer to said controller of said motor; and
if the signal indicates the pressure is below a target pressure, actuating said motor to drive said valve in a first direction with respect to said flow channel; and
if the signal indicates the pressure is above the target pressure, actuating said motor to drive said valve in a second direction opposite to the first direction with respect to said flow channel.

2. The method of claim 1, wherein the pressure is sensed upstream of said valve in a direction of fluid travel through said flow channel.

3. The method of claim 1, further comprising translating said valve with respect to said flow channel.

4. The method of claim 1, wherein said valve is connected to a worm gear, further comprising translating the valve with respect to said flow channel by rotating said worm gear.

5. The method of claim 1, wherein the pressure is sensed downstream of said valve in a direction of fluid travel through said flow channel.

6. A valve system for regulating the pressure of a fluid, said valve system comprising:
a valve block having a valve block inlet configured to be placed in fluid communication with an outlet of an extruder, a valve block outlet configured to be placed in fluid communication with an inlet of a die, and a flow channel extending between said valve block inlet and said valve block outlet;
a motor having a controller;
a valve assembly having a valve selectively positionable within said flow channel by said motor; and
a transducer in fluid communication with said flow channel and in signal communication with said controller, said transducer being configured to sense a pressure of a fluid travelling through said flow channel and communicate a signal representative of the pressure to said controller, said controller being configured to actuate said motor to drive said valve in a first direction with respect to said flow channel if the signal indicates the pressure is below a target pressure, and said controller being configured to actuate said motor to drive said valve in a second direction opposite to the first direction with respect to said flow channel if the signal indicates the pressure is above the target pressure.

7. The system of claim 6, wherein said transducer is positioned upstream of said valve in a direction of fluid travel through said flow channel.

8. The system of claim 6, further comprising a motor mounting bracket and at least one stand-off bar, said motor connected to said motor mounting bracket and offset from said valve block by said at least one stand-off bar.

9. The system of claim 6, further comprising a valve guide, said valve configured to translate within said valve guide.

10. The system of claim 6, further comprising an adjustment mechanism including a worm gear, said valve connected to said adjustment mechanism and configured to translate with respect to said flow channel in response to rotation of said worm gear.

11. The system of claim 6, wherein said flow channel has a first portion parallel to a direction of travel of said valve, and a second portion perpendicular to said direction of travel of said valve.

12. The system of claim 6, wherein said transducer is positioned downstream of said valve in a direction of fluid travel through said flow channel.

13. The system of claim 6, further including a screen pack positioned upstream of said valve in a direction of fluid travel through said flow channel.

14. The system of claim 6, further including a breaker plate positioned upstream of said valve in a direction of fluid travel through said flow channel.
